# FASCICULE DE BREVET EUROPEEN

(11) **EP 0 441 700 B1**
(45) Date de publication et mention de la délivrance du brevet: **11.06.1997**
(21) Numéro de dépôt: 91400276.1
(22) Date de dépôt: 06.02.1991
(51) Int. Cl.: C04B 35/80, C04B 35/56, C04B 41/50

(54) **Procédé de fabrication de matériau composite à renfort à base de fibres de carbone et matrice céramique**
Verfahren zur Herstellung eines Kohlenstoffaser-verstärkten keramischen Matrix-Verbundwerkstoffs
Process of manufacturing a carbon fibre-reinforced ceramic matrix composite material

(30) Priorité: 09.02.1990 FR 9001563
(43) Date de publication de la demande: 14.08.1991
(73) Titulaire: SOCIETE EUROPEENNE DE PROPULSION, 92150 Suresnes (FR)
(72) Inventeur: Rocher, Jean-Philippe, F-33160 Saint Medard en Jalles (FR); Cavalier, Jean-Claude, F-33290 Le Pian Medoc (FR); Laquet, Jean-Luc, F33700 Merignac (FR)
(74) Mandataire: Joly, Jean-Jacques

(56) Documents cités:
- EP-A- 0 121 797
- EP-A- 0 172 082
- GB-A- 2 092 119
- US-A- 4 397 901
- JOURNAL OF MATERIALS SCIENCE. vol. 20, no. 9, septembre 1985, LONDON GB pages 3201 - 3212; H.Tawil et al.: "Thermal diffusivity of chemically vapour deposited silicon carbide reinforced with silicon carbide or carbon fibres"
- Accession Number 90-295732 (Week 39) World Patents Index Latest, Derwent Publications Ltd., London, GB and JP - 2210060 (210890 Agency of Industrial Science and Technology

## Description

La présente invention concerne les matériaux composites à renfort à base de fibres de carbone densifié par une matrice céramique.

Les fibres de carbone sont utilisées pour constituer des textures de renfort pour la fabrication de matériaux composites, en particulier les matériaux composites à matrice céramique (CMC) thermostructuraux. Ces derniers présentent des propriétés qui les rendent aptes à résister à des sollicitations mécaniques importantes aux températures élevées. Ils comprennent une matrice céramique déposée au sein de la porosité du renfort fibreux, par exemple par infiltration chimique en phase vapeur.

La présente invention vise à fournir un procédé permettant d'améliorer de façon substantielle les propriétés du matériau composite obtenu, en particulier pour augmenter la résistance en traction et la résistance au fluage.

Conformément à l'invention, ce but est atteint du fait que le matériau constitutif du renfort à base de fibres de carbone est soumis, avant densification par la matrice, à un traitement thermique en milieu non oxydant à une température supérieure à 1 300°C et inférieure à 2 200°C.

Comme cela ressortira des résultats d'essais donnés plus loin, un tel traitement thermique permet d'obtenir un matériau composite ayant une tenue mécanique améliorée, en particulier de meilleures résistances en traction et au fluage.

Le domaine d'application de l'invention est plus particulièrement celui des matériaux composites thermostructuraux à renfort à base de fibres de carbone et à matrice céramique.

La fabrication de ces matériaux composites est bien connue. Un renfort fibreux en carbone constituant une préforme d'une pièce à réaliser est formé soit par bobinage de fibres ou fils, soit par empilement de strates unidirectionnelles (nappes de fils ou câbles) ou bidimensionnelles (tissus ou feutres) éventuellement liées entre elles par aiguilletage, soit par tissage tridimensionnel de fibres ou fils. Le renfort fibreux, le cas échéant maintenu en forme par un outillage, est densifié par le matériau de la matrice. Cette densification peut être réalisée par imprégnation liquide, au moyen d'un précurseur de la matrice, suivie de traitement thermique laissant un dépôt du matériau de la matrice sur les fibres du renfort, au sein de celui-ci. Plusieurs cycles d'imprégnation sont généralement nécessaires pour obtenir le degré de densification voulu. La densification peut également être réalisée par infiltration chimique en phase vapeur au sein d'un four d'infiltration.

De multiples procédés ont été proposés pour améliorer le comportement de tels matériaux composites, notamment leur tenue mécanique et leur résistance à l'oxydation. En particulier, une amélioration sensible des propriétés mécaniques est obtenue en déposant entre les fibres de la texture du renfort et la matrice céramique une mince couche adhérente intermédiaire à structure lamellaire, par exemple une couche en pyrocarbone laminaire ou en nitrure de bore. Ce procédé est décrit dans le document EP-A-0 172 082.

La présente invention vise encore à améliorer les propriétés mécaniques du matériau composite en réalisant un traitement thermique en milieu non oxydant, avant l'étape de densification par la matrice céramique, et à une température comprise entre 1 300°C et 2 200°C, pour agir sur la liaison entre les fibres et la matrice, de sorte que les propriétés mécaniques et notamment la résistance en traction, du matériau composite sont améliorées.

Le traitement thermique est réalisé sur le renfort à base de fibres de carbone avant ou après élaboration de la préforme fibreuse de renfort, mais, dans tous les cas, avant le dépôt effectif du matériau constitutif de la matrice céramique. Il peut être réalisé avant ou après dépôt d'un matériau constitutif d'une couche intermédiaire déposée sur les fibres de carbone servant d'interphase entre celles-ci et la matrice céramique.

Le traitement thermique est réalisé à une température supérieure à 1 300°C. La température maximale a, quant à elle, été choisie égale à 2 200°C de façon à limiter la graphitation des fibres.

Bien entendu, le traitement thermique est réalisé en milieu non oxydant, par exemple sous atmosphère d'azote ou sous vide, et sa durée est de préférence au moins égale à 30 min. Cette durée dépendant toutefois de la température du traitement, elle peut être choisie inférieure à 30 min. si la température du traitement est élevée.

Dans le cas où le traitement thermique est effectué sur la préforme fibreuse avant densification par infiltration chimique en phase vapeur, ce traitement peut avantageusement être réalisé dans le four d'infiltration, avant injection du gaz ou du mélange gazeux donnant le matériau constitutif de l'interphase ou de la matrice.

Il a déjà été proposé dans le document EP-A-0 121 797 de réaliser un traitement thermique sur un substrat en fibres de carbone, avant densification de celui-ci par une matrice. Toutefois, le traitement thermique est réalisé à une température qui, dans les exemples donnés, est au plus de 2 300°F (environ 1 250°C). En outre, l'objet du traitement est de réaliser la stabilisation thermique du substrat et aucune durée de traitement thermique n'est spécifiée si ce n'est une durée suffisante pour stabiliser thermiquement le substrat.

Par ailleurs, une caractéristique des matériaux obtenus par le procédé décrit dans le document EP-A-0 121 797 est que le substrat en fibres de carbone peut librement bouger par rapport à la matrice. L'absence de liaison entre les fibres et la matrice peut certes conduire à une ténacité et une résistance aux chocs élevées, en empêchant que des fissures se propageant dans la matrice n'attaquent et ne cassent les fibres. Toutefois, cette absence de liaison fait que le transfert de charges de la matrice vers les fibres est quasi nul, d'où l'impossibilité d'atteindre une résistance en traction élevée.

Dans le procédé conforme à la présente invention, le traitement thermique est réalisé à une température comprise entre 1 300 et 2 200°C et a pour objet l'amélioration des caractéristiques mécaniques du matériau composite obtenu après densification du substrat.

Le but visé par l'invention n'est pas une stabilisation thermique du substrat ou une stabilisation dimensionnelle des fibres du substrat. Comme le montrent les exemples ci-après, le traitement thermique effectué conformément à l'invention agit sur la liaison fibres-matrice, et une amélioration des propriétés mécaniques du matériau composite est observée également lorsque le traitement thermique est effectué sur un substrat constitué de fibres de carbone à haut module qui ont connu des températures élevées lors de leur élaboration et sont déjà stabilisées dimensionnellement.

Il a aussi été proposé dans le document GB-A-2 092 119 d'effectuer un traitement thermique sur des fibres en graphite incorporées dans un matériau. Toutefois, le but est de réaliser un matériau ayant des propriétés abrasives particulières, qui est constitué de cristaux de diamant ou de nitrure de bore cubique, de fibres de graphite, de carbure de silicium et de silicium. Le matériau est obtenu par infiltration par du silicium liquide d'un mélange comprenant les cristaux, les fibres de graphite et du carbone (ou précurseur de carbone). Le traitement thermique est réalisé sous vide pour produire un dégazage d'impuretés adsorbées sur les fibres afin d'augmenter la mouillabilité par le silicium liquide. De plus, les fibres de graphite sont des fibres courtes (ou "whiskers") dont la présence a essentiellement pour but de favoriser la mouillabilité par le silicium et non pas de constituer un substrat fibreux ayant une fonction de renfort comme dans les matériaux composites visés par la présente invention.

Plusieurs exemples de mise en oeuvre du procédé selon l'invention seront maintenant donnés.

### Exemple 1

Des pièces en matériau composite de type 2D-C/SiC (renfort bidirectionnel en carbone et matrice en carbure de silicium) sont réalisées par un procédé comprenant les étapes suivantes :
- formation d'une préforme par empilement à plat de strates d'un tissu de fibres de carbone commercialisées sous la référence "T300" par la société japonaise Toray (fibres à précurseur polyacrylonitrile, ou PAN),
- maintien de la préforme dans un outillage,
- traitement thermique de la préforme,
- formation sur les fibres d'un revêtement intermédiaire en pyrocarbone laminaire par infiltration chimique en phase vapeur,
- densification de la préforme, munie du revêtement intermédiaire, par infiltration chimique en phase gazeuse du carbure de silicium (SiC) constituant la matrice.

A l'exception du traitement thermique du tissu, un procédé de ce type est décrit dans le brevet EP 172 082.

Le tableau 1 ci-après montre les résultats de mesures effectuées sur des pièces A à F obtenues comme décrit ci-dessus en faisant varier les conditions du traitement thermique. A titre comparatif, des mêmes mesures ont été effectuées sur une pièce G obtenue de la même façon à l'exception du traitement thermique. Les valeurs mesurées sont : la densité d du matériau composite, la résistance à rupture en traction σR, l'allongement à rupture εR, le module d'élasticité E et la résistance au cisaillement interlaminaire σ13.

**Tableau 1**

| Pièce | Traitement de la préforme | | | d | σR (MPa) | εR (%) | E (GPa) | σ13 (MPa) |
|---|---|---|---|---|---|---|---|---|
| | T(°C) | durée | atm. | | | | | |
| A | 1 400 | 30 min | vide | 1,9 | 490 | 0,93 | 98 | 20 |
| B | 1 600 | 30 min | vide | 1,9 | 480 | 0,83 | 99 | 16 |
| C | 1 800 | 30 min | vide | 1,93 | 490 | 0,74 | 106 | 17 |
| D | 2 000 | 30 min | vide | 1,93 | 450 | 0,62 | 109 | 17 |
| E | 1 600 | 10 h | vide | 1,9 | 480 | 0,81 | 107 | 19,5 |
| F | 1 600 | 30 min | N₂ | 1,9 | 460 | 0,86 | 97 | 21 |
| G | - | - | - | 1,9 | 350 | 0,66 | 82 | 14 |

Les pièces A à D ont été obtenues en utilisant des tissus ayant subi, au stade préforme, un traitement thermique sous vide (c'est-à-dire une pression d'environ 0,1 torr ou 13,3 N/m²), pendant 30 min, à des températures respectivement égales à 1 400°C, 1 600°C, 1 800°C et 2 000°C.

La pièce E a été obtenue en utilisant une préforme ayant subi un traitement thermique sous vide à 1 600°C pendant 10 h et la pièce F en utilisant une préforme ayant subi un traitement thermique sous azote (pression atmosphérique) à 1 600°C pendant 30 min.

Pour toutes les pièces A à F, des augmentations de la résistance à rupture σR (variant entre 29% et 40%), du module d'élasticité E et de la résistance au cisaillement interlaminaire σ13 sont observées par rapport à la pièce G.

Une augmentation de l'allongement à rupture est également observée, sauf pour la pièce D (traitement du tissu à 2 000°C).

La comparaison des mesures effectuées sur les pièces B et E semble indiquer qu'un traitement thermique de 10 h (au lieu de 30 min) amène un accroissement du module E (une élévation de la température du traitement produit le même effet), mais n'apporte rien de déterminant pour ce qui est de la résistance et de l'allongement à rupture.

Les observations morphologiques au microscope électronique à balayage et en microscopie électronique à transmission ont été effectuées sur les pièces après rupture en traction. Dans les matériaux dont les préformes ont subi un traitement thermique conforme à l'invention, il a été constaté que la rupture se produit à l'interface entre les fibres et le revêtement intermédiaire en pyrocarbone. Par contre, pour la pièce G, il a été constaté que la rupture se produit à l'interface entre le revêtement intermédiaire en pyrocarbone et la matrice en carbure de silicium ou au sein du revêtement intermédiaire.

Par conséquent, le traitement thermique effectué conformément à l'invention modifie la liaison fibre-matrice dans un composite de type C/SiC avec revêtement intermédiaire en pyrocarbone, et ainsi les caractéristiques du composite en traction sont nettement augmentées. Même si la rupture se produit à l'interface fibre-matrice, il est clair que la fibre n'est pas pour autant libre de bouger par rapport à la matrice, ce qui serait en contradiction avec l'accroissement constaté de la résistance à la traction.

Des mesures de dilatation ont été faites sur les pièces A et G. Ces mesures ont mis en évidence une même variation de dimension rémanente, indiquant que le traitement thermique effectué sur la préforme de la pièce A n'a pas eu d'effet de stabilisation dimensionnelle des fibres.

### Exemple 2

Deux pièces H et I en matériau composite de type 2D-C/SiC sont obtenues comme dans l'exemple 1 en utilisant un tissu de fibres de carbone commercialisées sous la référence "T300" par la société japonaise Toray. Le tissu, au stade préforme, a subi un traitement thermique sous vide :
- à 1 200°C pendant 30 min pour la pièce H,
- à 800°C pendant 30 min pour la pièce I.

Le tableau 2 montre le résultat des mesures de d, σR, εR et E effectuées sur les pièces H et I.

**Tableau 2**

| Pièce | Traitement de la préforme | | | d | σR (MPa) | εR (%) | E (GPa) |
|---|---|---|---|---|---|---|---|
| | T(°C) | durée | atm. | | | | |
| H | 1 200 | 30 min | vide | 1,93 | 360 | 0,70 | 80 |
| I | 800 | 30 min | vide | 1,91 | 355 | 0,68 | 78 |

La comparaison des résultats obtenus sur les pièces H et I avec ceux obtenus sur la pièce G (tableau 1) montre qu'aucune amélioration substantielle des caractéristiques mécaniques n'est obtenue.

### Exemple 3

Une pièce J en matériau composite de type 2D-C/SiC est obtenue comme dans l'exemple 1 en utilisant un tissu de fibres de carbone commercialisées sous la référence "HTA7" par la société japonaise Toho. Le tissu, au stade préforme, a subi un traitement thermique à 1 600°C sous vide pendant 30 min. A titre de comparaison, une pièce K a été réalisée de la même façon à l'exception du traitement thermique de la préforme.

Le tableau 3 montre le résultat des mesures de d, R, R et E effectuées sur les pièces J et K.

**Tableau 3**

| Pièce | Traitement de la préforme | | | d | σR (MPa) | εR (%) | E (GPa) |
|---|---|---|---|---|---|---|---|
| | T(°C) | durée | atm. | | | | |
| J | 1 600 | 30 min | vide | 1,94 | 420 | 0,81 | 91 |
| K | - | - | - | 1,94 | 300 | 0,58 | 71 |

On note l'amélioration très importante apportée par le traitement thermique.

### Exemple 4

Une pièce L en matériau composite de type 2D-C/SiC est obtenue comme dans l'exemple 1 en utilisant un tissu de fibres de carbone commercialisées sous la référence "M40" par la société japonaise Toray. La préforme a subi un traitement thermique à 1 400°C sous vide pendant 30 min. A titre de comparaison une pièce M a été réalisée de la même façon à l'exception du traitement thermique de la préforme.

Le tableau 4 donne les résultats des mesures de σR, εR et E effectuées sur les pièces L et M.

On note que, même sur des tissus à base de fibres "M40" (fibres haut module ayant été élaborées à des températures supérieures à 2 200°C et, par conséquent stabilisées dimentionnellement), un traitement thermique à 1 400°C amène une nette amélioration au niveau de la résistance en traction et de la déformation à rupture des matériaux 2D-C/SiC avec interphase pyrocarbone laminaire.

**Tableau 4**

| Pièce | Traitement de la préforme | | | d | σR (MPa) | εR (%) | E (GPa) |
|---|---|---|---|---|---|---|---|
| | T(°C) | durée | atm. | | | | |
| L | 1 400 | 30 min | vide | 1,94 | 350 | 0,53 | 76 |
| M | - | - | - | 1,96 | 250 | 0,35 | 95 |

### Exemple 5

Une pièce N en matériau composite de type 2D-C/SiC est obtenue comme dans l'exemple 1 en utilisant un tissu de fibres de carbone commercialisées sous la référence "T300" par la société japonaise Toray. La préforme a subi un traitement thermique à 1 600°C sous 0,1 torr (13,3 N/m²) pendant 30 min. A titre de comparaison, une pièce P a été réalisée de la même façon à l'exception du traitement thermique de la préforme.

Ces matériaux ont été caractérisés au fluage en traction à 1 500°C. Pour la pièce N, après 2 h 30 sous une charge de 250 MPa, une déformation de 0,23% a été observée. Pour la pièce P, dans les mêmes conditions, une déformation de 0,45% a été mesurée.

Le traitement thermique conduit donc à une amélioration notable de la tenue au fluage.

Dans les exemples qui précèdent, le traitement thermique est réalisé sur la préforme constituée par un empilement de strates de tissu maintenues dans un outillage.

Le traitement thermique pourrait bien entendu être réalisé sur le tissu de fibres de carbone avant formation de la préforme, voire avant découpe des strates, par exemple sur un rouleau de tissu, comme le montre l'exemple 6.

### Exemple 6

Une pièce Q en matériau composite de type 2D-C/SiC est réalisée par un procédé comprenant les étapes suivantes :
- traitement thermique à 1 600°C sous vide pendant 30 min d'un rouleau de tissu de fibres de carbone commercialisées sous la référence "T300" par la société japonaise Toray,
- formation d'une préforme par empilement à plat de strates de ce tissu ainsi traité,
- maintien de la préforme dans un outillage,
- formation sur les fibres d'un revêtement intermédiaire en pyrocarbone laminaire par infiltration chimique en phase vapeur,
- densification de la préforme, munie du revêtement intermédiaire, par infiltration chimique en phase gazeuse du carbure de silicium constituant la matrice.

Les mesures de σR, εR et E effectuées sur la pièce Q sont identiques à celles effectuées sur la pièce B dont la fabrication est décrite dans l'exemple 1. Pour mémoire, la seule différence entre les procédés utilisés pour réaliser les pièces Q et B est que, pour la pièce Q, le traitement thermique est effectué sur le rouleau de tissu, et que, pour la pièce B, le traitement thermique est réalisé sur la préforme constituée par l'empilement des strates de tissu.

### Exemple 7

Une pièce R en matériau composite de type 2D-C/C-SiC est réalisée par un procédé comprenant les étapes suivantes :
- formation d'une préforme par empilement à plat de strates de tissu de fibres de carbone commercialisées sous la référence "T300" par la société japonaise Toray,
- maintien de la préforme dans un outillage,
- traitement thermique de la préforme à 1 600°C sous vide (c'est-à-dire sous une pression d'environ 0,1 torr ou 13,3 N/m²) pendant 30 min,
- densification partielle de la préforme par infiltration chimique en phase gazeuse du carbone. Le taux volumique de matrice carbone déposée est de 30%,
- fin de la densification de la préforme, déjà partiellement densifiée avec du carbone, par infiltration chimique en phase gazeuse du carbure de silicium. Le taux volumique de matrice carbure de silicium déposé est de 10%. Après cette densification, la porosité résiduelle du matériau est comprise entre 10 et 15%.

A titre de comparaison, une pièce S a été réalisée de la même façon à l'exception du traitement thermique de la préforme.

Le tableau 5 montre le résultat des mesures de d, σR, εR et E effectuées sur les pièces R et S.

**Tableau 5**

| Pièce | Traitement de la préforme | | | d | σR (MPa) | εR (%) | E (GPa) |
|---|---|---|---|---|---|---|---|
| | T(°C) | durée | atm. | | | | |
| R | 1 600 | 30 min | vide | 1,70 | 370 | 0,58 | 68 |
| S | - | - | - | 1,74 | 390 | 0,71 | 60 |

On note que, contrairement aux cas des matériaux C/SiC avec interphase PyC, le traitement thermique n'amène aucune amélioration au niveau de la résistance en traction et de la déformation à rupture pour les matériaux C/matrice biphasée C-SiC. Ceci est lié au fait que le transfert de charge entre fibres et matrice est différent selon quel'on a une matrice C ou une matrice SiC.

### Exemple 8

Une pièce T en matériau composite de type 2D-C/SiC est réalisée par un procédé comprenant les étapes suivantes :
- formation d'une préforme par empilement à plat de strates d'un tissu de carbone commercialisées sous la référence "T300" par la société japonaise Toray,
- maintien de la préforme dans un outillage,
- formation sur les fibres d'un revêtement intermédiaire en pyrocarbone laminaire par infiltration chimique en phase vapeur,
- traitement thermique sous vide de la préforme ainsi revêtue,
- densification de la préforme par infiltration chimique en phase vapeur du carbure de silicium constituant la matrice.

A l'exception de la phase de traitement thermique, un procédé de ce type est décrit dans le document EP-A-0 172 082.

Le tableau 6 ci-après montre les résultats de mesures de d, σR, εR et E effectuées sur la pièce T et rappelle les résultats obtenus avec la pièce G de l'exemple 1 élaborée par un procédé de l'art antérieur.

**Tableau 6**

| Pièce | Traitement de la préforme | | | d | σR (MPa) | εR (%) | E (GPa) |
|---|---|---|---|---|---|---|---|
| | T(°C) | durée | atm. | | | | |
| T | 1 600 | 150 min | vide | 2,0 | 420 | 0,82 | 92 |
| G | - | - | - | 1,9 | 350 | 0,66 | 82 |

Le traitement thermique de la préforme ayant déjà reçu le dépôt du matériau d'interphase (pyrocarbone) amène donc, là encore, une augmentation nette des caractéristiques mécaniques du matériau composite final.

Dans les exemples qui précèdent, la matrice céramique ainsi que le revêtement intermédiaire (interphase pyrocarbone) sont mis en oeuvre par infiltration chimique en phase vapeur. Le procédé selon l'invention est applicable aussi dans le cas où la matrice et/ou l'interphase carbone sont mises en oeuvre par voie liquide.

### Exemple 9

Une pièce U en matériau composite de type 2D-C/SiC est réalisée par un procédé comprenant les étapes suivantes :
- traitement thermique d'un rouleau de fibres de carbone commercialisées sous la référence "T300" par la société japonaise Toray,
- imprégnation du tissu par une résine phénolique,
- mise en forme du tissu imprégné dans un outillage,
- pyrolyse de la résine produisant un coke de résine entourant les fibres de carbone ; un revêtement intermédiaire ou interphase en carbone est ainsi obtenu qui a un taux volumique (pourcentage du volume total apparent de la préforme occupé par la l'interphase) proche de celui obtenu avec le pyrocarbone laminaire déposé par infiltration chimique en phase vapeur dans les exemples précédents,
- densification de la préforme, munie du revêtement intermédiaire de coke de résine, par infiltration chimique en phase vapeur du carbure de silicium constituant la matrice.

Le tableau 7 ci-après montre les résultats des mesures de σR, εR et E obtenus sur la pièce U. A titre comparatif, des mêmes mesures ont été effectuées sur une pièce V obtenue de la même façon que la pièce U à l'exception du traitement thermique.

**Tableau 7**

| Pièce | Traitement de la préforme | | | σR (MPa) | εR (%) | E (GPa) |
|---|---|---|---|---|---|---|
| | T(°C) | durée | atm. | | | |
| U | 1 400 | 30 min | vide | 240 | 0,43 | 84 |
| V | - | - | - | 60 | 0,1 | 65 |

Là encore, le traitement thermique amène une nette amélioration des propriétés mécaniques du matériau composite. Celles-ci, pour la pièce U, sont toutefois inférieures à celles de la pièce A de l'exemple 1, le revêtement intermédiaire en carbone obtenu par voie liquide procurant un effet moindre que celui obtenu par voie gazeuse.

Les exemples qui précèdent mettent en évidence l'amélioration des propriétés mécaniques des composites à matrice céramique, en particulier au niveau des résistances en traction à température ambiante et au fluage à chaud, résultant du traitement thermique du renfort à base de fibres de carbone.

Les résultats obtenus sur composites à matrice céramique, qui sont bien supérieurs à ceux atteints, sans traitement thermique du renfort, en utilisant même des fibres haut module (c'est-à-dire des fibres ayant subi un traitement à hautes températures lors de leur élaboration), indiquent que c'est non pas au niveau des fibres, mais au niveau de la liaison fibres-matrice (ou fibres-interphase) que l'amélioration est apportée.

## Revendications

1. Procédé de fabrication d'un matériau composite thermostructural à matrice céramique, comprenant les étapes qui consistent à réaliser une préforme en fibres de carbone, soumettre les fibres de la préforme à un traitement thermique et densifier la préforme par la matrice céramique,
caractérisé en ce que le traitement thermique est réalisé en milieu non oxydant, avant l'étape de densification par la matrice céramique, et à une température comprise entre 1 300°C et 2 200°C, pour agir sur la liaison entre les fibres et la matrice, de sorte que les propriétés mécaniques et notamment la résistance en traction, du matériau composite sont améliorées.

2. Procédé selon la revendication 1, caractérisé en ce que le traitement thermique est effectué après réalisation de la préforme en fibres de carbone.

3. Procédé selon la revendication 2, selon lequel la densification par la matrice céramique est réalisée par infiltration chimique en phase vapeur au sein d'un four, caractérisé en ce que le traitement thermique est réalisé au sein du four en préalable à la densification.

4. Procédé selon la revendication 1, caractérisé en ce que le traitement thermique est effectué sur les fibres de carbone avant réalisation de la préforme.

5. Procédé selon l'une quelconque des revendications 1 à 4, comprenant en outre l'étape consistant à former un revêtement intermédiaire sur les fibres de carbone, caractérisé en ce que le traitement thermique est effectué avant formation du revêtement intermédiaire.

6. Procédé selon l'une quelconque des revendications 1 à 4, comprenant en outre l'étape consistant à former un revêtement intermédiaire sur les fibres de carbone, caractérisé en ce que le traitement thermique est effectué après formation du revêtement intermédiaire.

7. Procédé selon l'une quelconque des revendications 1 à 6, caractérisé en ce que le traitement thermique est effectué sous vide.

8. Procédé selon l'une quelconque des revendications 1 à 7, caractérisé en ce que le traitement thermique est effectué sous atmosphère d'azote.

9. Procédé selon l'une quelconque des revendications 1 à 8, caractérisé en ce que le traitement thermique est effectué à une température d'environ 1 400°C à 1 800°C.

## Patentansprüche

1. Verfahren zur Herstellung eines bei erhöhter Temperatur tragfähigen Verbundmaterials mit keramischer Matrix, aufweisend die Schritte, die bestehen aus dem Herstellen einer Vorform aus Kohlenstoff-Fasern, dem Unterziehen der Fasern der Vorform einer thermischen Behandlung und dem Verdichten der Vorform durch die keramische Matrix,
**dadurch gekennzeichnet**,
daß die thermische Behandlung vor dem Schritt der Verdichtung durch die keramische Matrix in nicht oxidierender Umgebung und bei einer Temperatur zwischen 1300°C und 2200°C durchgeführt wird, um dergestalt auf die Verbindung zwischen den Fasern und der Matrix einzuwirken, daß die mechanischen Eigenschaften und insbesondere die Zugfestigkeit des Verbundmaterials verbessert werden.

2. Verfahren nach Anspruch 1,
**dadurch gekennzeichnet**,
daß die thermische Behandlung nach der Herstellung der Vorform aus Kohlenstoff-Fasern ausgeführt wird.

3. Verfahren nach Anspruch 2,
bei dem die Verdichtung durch die keramische Matrix im Inneren eines Ofens durch chemisches Eindringen in der Dampfphase durchgeführt wird,
**dadurch gekennzeichnet**,
daß die thermische Behandlung im Inneren des Ofens der Verdichtung vorausgehend durchgeführt wird.

4. Verfahren nach Anspruch 1,
**dadurch gekennzeichnet**,
daß die thermische Behandlung vor der Herstellung der Vorform an den Kohlenstoff-Fasern ausgeführt wird.

5. Verfahren nach einem der Ansprüche 1 bis 4,
außerdem aufweisend den Schritt, der besteht aus dem Bilden einer Zwischenbeschichtung auf den Kohlenstoff-Fasern,
**dadurch gekennzeichnet**,
daß die thermische Behandlung vor Bildung der Zwischenbeschichtung ausgeführt wird.

6. Verfahren nach einem der Ansprüche 1 bis 4,
außerdem aufweisend den Schritt, der besteht aus dem Bilden einer Zwischenbeschichtung auf den Kohlenstoff-Fasern,
**dadurch gekennzeichnet**,
daß die thermische Behandlung nach Bildung der Zwischenbeschichtung ausgeführt wird.

7. Verfahren nach einem der Ansprüche 1 bis 6,
**dadurch gekennzeichnet**,
daß die thermische Behandlung im Vakuum ausgeführt wird.

8. Verfahren nach einem der Ansprüche 1 bis 7,
**dadurch gekennzeichnet**,
daß die thermische Behandlung in Stickstoff-Atmosphäre ausgeführt wird.

9. Verfahren nach einem der Ansprüche 1 bis 8,
**dadurch gekennzeichnet**,
daß die thermische Behandlung bei einer Temperatur von etwa 1400°C bis 1800°C ausgeführt wird.

## Claims

1. A process for the manufacture of a thermostructural composite material having a ceramic matrix, said process comprising the steps consisting in carrying out a preform made of carbon fibers, in subjecting the fibers of the preform to a thermal treatment and in densifying the preform by the ceramic matrix,
characterized in that the thermal treatment is performed in a non-oxidizing environment prior to the densification step by the ceramic matrix, and at a temperature comprised between 1,300°C and 2,200°C in order to act on the bonding between the fibers and the matrix such that the mechanical properties and in particular the tensile strength of the composite material are improved.

2. The process according to claim 1, characterized in that the thermal treatment is performed after carrying out the preform made of carbon fibers.

3. The process according to claim 2, according to which the densification by the ceramic matrix is carried out by chemical vapor infiltration inside a fumace, characterized in that the thermal treatment is carried out inside the furnace prior to the densification.

4. The process according to claim 1, characterized in that the thermal treatment is performed on the carbon fibers before carrying out the preform.

5. The process according to any one of claims 1 to 4, further comprising the step consisting in forming an intermediate coating on the carbon fibers, characterized in that the thermal treatment is performed before forming the intermediate coating.

6. The process according to any one of claims 1 to 4, further comprising the step consisting in forming an intermediate coating on the carbon fibers, characterized in that the thermal treatment is performed after forming the intermediate coating.

7. The process according to any one of claims 1 to 6, characterized in that the thermal treatment is performed under vacuum.

8. The process according to any one of claims 1 to 7, characterized in that the thermal treatment is performed under nitrogen atmosphere.

9. The process according to any one of claims 1 to 8, characterized in that the thermal treatment is performed at a temperature from about 1,400°C to 1,800°C.
